(19) Europäisches Patentamt
European Patent Office
Office européen des brevets

(11) **EP 3 605 506 B1**

(12) **EUROPEAN PATENT SPECIFICATION**

(45) Date of publication and mention
of the grant of the patent:
**16.08.2023 Bulletin 2023/33**

(21) Application number: **18772003.2**

(22) Date of filing: **23.03.2018**

(51) International Patent Classification (IPC):
**B29C 65/48** (2006.01)   **C08J 5/12** (2006.01)
**C08L 25/06** (2006.01)   **C08L 53/02** (2006.01)
**B29K 25/00** (2006.01)   **B29K 27/06** (2006.01)
**B29L 23/00** (2006.01)   **G09F 3/02** (2006.01)

(52) Cooperative Patent Classification (CPC):
(C-Sets available)
**B29C 65/4895; B29C 66/1122; B29C 66/4322;
B29C 66/71; B29C 66/73715; C08J 5/122;
C08L 25/06; C08L 53/02;** B29L 2023/001;
B29L 2031/744; C08J 2325/06; C08J 2327/06;
C08L 2205/03; G09F 2003/0251         (Cont.)

(86) International application number:
**PCT/JP2018/011748**

(87) International publication number:
**WO 2018/174254 (27.09.2018 Gazette 2018/39)**

(54) **HEAT-SHRINKABLE LABEL, PACKAGING BODY, AND MANUFACTURING METHOD FOR HEAT-SHRINKABLE LABEL**

WÄRMESCHRUMPFBARES ETIKETT, VERPACKUNGSKÖRPER UND HERSTELLUNGSVERFAHREN FÜR WÄRMESCHRUMPFBARES ETIKETT

ÉTIQUETTE THERMORÉTRACTABLE, CORPS D'EMBALLAGE ET PROCÉDÉ DE FABRICATION D'ÉTIQUETTE THERMORÉTRACTABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.03.2017   JP 2017059033
30.03.2017   JP 2017067576
30.03.2017   JP 2017067577
12.04.2017   JP 2017078873**

(43) Date of publication of application:
**05.02.2020 Bulletin 2020/06**

(73) Proprietor: **TOYOBO CO., LTD.
Osaka-shi
Osaka 5300001 (JP)**

(72) Inventors:
• **INOUE, Masafumi
Tsuruga-shi
Fukui 914-8550 (JP)**
• **HARUTA, Masayuki
Tsuruga-shi
Fukui 914-8550 (JP)**
• **OKU, Hisao
Osaka-shi
Osaka 530-8230 (JP)**

(74) Representative: **Vossius & Partner
Patentanwälte Rechtsanwälte mbB
Siebertstrasse 3
81675 München (DE)**

(56) References cited:
**EP-A1- 2 892 044        WO-A1-2016/039133
JP-A- 2003 094 521     JP-A- 2013 134 446
US-A1- 2014 099 462   US-B2- 8 778 077**

(52) Cooperative Patent Classification (CPC): (Cont.)

C-Sets
**B29C 66/71, B29K 2025/06;**
**B29C 66/71, B29K 2027/06;**
**C08L 25/06, C08L 53/02, C08L 53/02;**
**C08L 53/02, C08L 25/06, C08L 53/02**

C-Sets

**Description**

TECHNICAL FIELD

The present invention relates to a heat-shrinkable label formed by rounding a heat-shrinkable polyvinyl chloride-based film or a heat-shrinkable polystyrene-based film into a tubular form, and bonding both end portions of the film with a solvent. The invention relates more specifically to a heat-shrinkable label about which even when a film for forming the label is thin, an excessive penetration of a solvent is not easily caused in solvent bonded-portion of the film.

BACKGROUND ART

A heat-shrinkable film has a function called shrinkability, so that without using, for example, any adhesive or fastening tool, the film can be laminated onto an object to be integrated therewith by shrinkage force and shape-imparting performance of the film itself.

Accordingly, the film also has bundling, sealing and other functions, as well as a mechanical protection of the object by laminating or covering. Furthermore, when the heat-shrinkable film itself has an especial function, the especial function can be given to the object in an after-setting manner by laminating the film onto the object. This property is effectively used in a packaging field having main purposes of storing objects and protecting the objects in a circulation thereof, and giving display and design to objects. For example, the heat-shrinkable film is used, for example, for the covering, bundling, exterior decoration, or sealing of bottles, such as respective bottles made of glass and plastic material, cans and other various containers, pipes, rods, lumbers, various rod-like bodies and other long objects; or sheet-like bodies. Specifically, the heat-shrinkable film is used to cover, partially or wholly, a cap portion, a shoulder portion, and a body portion of a bottle to improve commodities in value by display, protection, bundling, and functionalization. Furthermore, the heat-shrinkable film is used, for example, for collecting and accumulating objects to be packaged, such as boxes, bottles, plates rods or notebooks, in each group of two or more thereof, and then packaging the objects; or for being caused to adhere closely to an object to be packaged for attaining the package of the object with the film (skin package). In a case where at this time a form shaped for display or design is beforehand given to the film, the film functions as a commodity referred to as a label.

Usable examples of the material of a heat-shrinkable film include polyvinyl chloride, polystyrene, polyester, polyamide and aliphatic polyolefin; derivatives thereof; and hydrochlorinated rubber. Usually, packaging or bundling is attained by shaping a film made of any one of these materials into a tubular form and then covering, for example, a bottle with the film, or collecting and accommodating, for example, pipes thereon and then shrinking the film thermally. However, any conventional heat-shrinkable film is poor in heat resistance not to endure boiling treatment or retorting treatment at a high temperature to have a drawback that when the film is applied to food, sanitary goods, or medicines, the film cannot be subjected to sterilizing treatment at a high temperature. A conventional film has, for example, a problem that when subjected to retorting treatment, the film is easily broken in the treatment.

In the case of conventional heat-shrinkable films, one of the films that is made of a polyester-based resin is excellent in heat resistance, dimension stability, solvent resistance, and others; however, in order to attain desired heat-shrinkability, adhesiveness, and other properties, the film needs to a technique of controlling manufacturing conditions thereof precisely. Thus, problems about costs and others are caused.

Moreover, because of usefulness of heat-shrinkable films, the heat-shrinkable films have come to be used also in a field in which a film or label that is not any heat-shrinkable film has been hitherto used. In particular, labels for drink containers have been substituted from attaching-labels each made of a film that is not any paper piece or heat-shrinkable film to heat-shrinkable labels in many cases. In particular, in the field of labels for plastic bottle containers, the application of heat-shrinkable labels is actively made in connection with problems about recycling, so as to perform various embodiments or manners of packaging designs. Among heat-shrinkable films, polyvinyl chloride-based shrinkable films and polystyrene-based shrinkable films are frequently used, the former being very good in heat-shrinkability and small in natural shrinkage percentage, and the latter being low in shrinkage stress and high in shrinkage percentage.

However, heat-shrinkable labels turn to garbage after used. Thus, it has recently become necessary from the viewpoint of the environment to reduce the amount of garbage. Accordingly, it has been started to use thin heat-shrinkable labels (heat-shrinkable labels made small in thickness).

Apart from the above, in order to form a tubular label from a heat-shrinkable film, it is necessary to put one of the two end portions of the film in the width direction of the film onto the other end, and then fix the end portions onto each other. As a method for the fixing, for example, the following methods have been hitherto used: a solvent-bonding method (Patent Documents 1 and 2); or a method using an adhesive (Patent Document 3). Among these methods, the solvent bonding method is widely used since this method makes it possible to work the heat-shrinkable film into a tubular label at a high speed.

In this solvent bonding method, a rise-up of the following step in speed has been advanced to improve the production efficiency of labels to reduce costs: the step of working surfaces of a heat-shrinkable polyvinyl chloride-based film or heat-shrinkable polystyrene-based film into a tubular label (tubing step). In order to gain solvent bonded-portion of the label that has high peel strength (bonding strength) stably in the high-speed tubing step, it is general to use, as the bonding solvent, tetrahydrofuran (THF), methyl ethyl ketone (MEK), or ethyl acetate.

However, in the case of a heat-shrinkable polyvinyl chloride-based film or heat-shrinkable polystyrene-based film small in thickness and large in the proportion of amorphous raw material, the solvent of THF, MEK or ethyl acetate penetrates the film from a solvent-applied surface side of the film to the rear surface side thereof (solvent penetration-through), so that the solvent adheres also to the rear surface. When the tubular label after subjected to the solvent-bonding is wound up into a roll form, the tubular label is deformed into a flat form; in a case where the solvent penetration-through is caused in solvent bonded-portion of the label, a result of the solvent penetration-through causes the solvent bonded-portion to be bonded to a portion of the label that contacts the rear surface of the solvent bonded-portion, so that the label comes not to function as a tube, or the label undergoes blocking to become incapable of being unwound from the roll.

When the applied amount of THF, MEK or ethyl acetate is made small not to cause solvent penetration-through, the applied amount of the solvent is easily varied in the tubing step made high in speed. Thus, when the applied amount unfavorably becomes small, an inconvenience is caused that the solvent bonded-portion of the label does not come to gain a sufficient peel strength.

WO 2014/034881 (EP2892044 A1) discloses a shrink label provided with a joint formed by solvent welding an inner surface and an outer surface of the label base material, and wherein a resin layer soluble in a hot alkaline aqueous solution is formed on the inner and/or outer surface. US 2014/0099462 A1 relates to a process for producing a shrink-film tube, wherein a solvent is deposited on the film in a prescribed manner, and to a shrink film tube obtained in this manner.

PRIOR ART DOCUMENTS

PATENT DOCUMENTS

Patent Document 1: Japanese Patent No. 3075019
Patent Document 2: Japanese Patent No. 3452021
Patent Document 3: JP-A-2014-43520

SUMMARY OF THE INVENTION

PROBLEMS TO BE SOLVED BY THE INVENTION

An object of the present invention is to provide a heat-shrinkable label and a package each having solvent bonded-portion where solvent penetration-through is not caused even when the film is thin. An object of the invention is particularly to provide a heat-shrinkable label and a package each having a solvent bonded-portion that can gain a high peel strength stably even when a film for the label is passed through a tubing step made high in speed.

MEANS FOR SOLVING THE PROBLEMS

The inventor have repeatedly made eager investigations about the above-mentioned problems to find out that the problems are solved by using a bonding solvent composition made of a combination of specified compound species. Thus, the present invention has been accomplished. Accordingly, the present invention is defined by the appended claims 1 to 7.

EFFECT OF THE INVENTION

The present invention can provide a heat-shrinkable label and a package in each of which no solvent penetration-through is caused even when its heat-shrinkable polyvinyl chloride-based film or heat-shrinkable polystyrene-based film is small in thickness, and in each of which its solvent bonded-portion can gain a high peel strength stably even when the film is passed through a tubing step made high in speed.

MODE FOR CARRYING OUT THE INVENTION

The heat-shrinkable label of the present invention is a heat-shrinkable label having a tubular shape which is formed by bonding both end portions of a heat-shrinkable polyvinyl chloride-based film or a heat-shrinkable polystyrene-based film to each other, in a state that the end portions are overlapped with each other, through a solvent composition. Each of the end portions means an end portion of the film in a width direction thereof (direction along the longitudinal direction thereof), and is a positional area of the film which includes portions of the film within 20 mm of the end edge. Examples of the heat-shrinkable polyvinyl chloride-based film include not only a film made only of a single layer of polyvinyl chloride, but also a laminated film which has a laminated structure, such as a structure of "polyvinyl chloride"/"a resin other than polyvinyl chloride"/"polyvinyl chloride", in which outside layers are each a polyvinyl chloride film. Examples of the heat-shrinkable polystyrene-based film include not only a film made only of a single layer of polystyrene, but also a laminated film which has a laminated structure, such as a structure of "polystyrene"/"a resin other than polystyrene"/"polystyrene", in which outside layers are each a polystyrene film.

In the present invention, the bonding solvent composition contains both of at least one organic solvent selected from the group consisting of tetrahydrofuran (THF), methyl ethyl ketone (MEK) and ethyl acetate, and at least one resin selected from the group consisting of polyester, polypropylene and hydrogenated petroleum resin. In this way, even through a tubing step made high in speed, a label can be provided which is high in the peel strength of its solvent bonded-portion and is good against solvent penetration-through.

THF, MEK and ethyl acetate are each a good solvent for polyvinyl chloride and polystyrene to dissolve a polyvinyl chloride-based film and a polystyrene-based film rapidly, so that the resultant solvent bonded-portion has a high peel strength. However, the solvents easily cause solvent penetration-through to be unsuitable for thin films. When the applied amount thereof is small, it varies in high-speed solvent bonding. The variation causes an insufficient peel strength of the bonded portion.

When one or more monomer components which can be an amorphous component are incorporated into polyester, the polyester is easily dissolved in an organic solvent or melted by heat. Thus, the polyester is favorably usable as an adhesive. Moreover, polypropylene low in stereoregularity or hydrogenated petroleum resin of a dicyclopentadiene/aromatic copolymer type is also usable suitably for an adhesive. As described above, therefore, the resultant solvent bonded-portion can gain a high peel strength even when the amount of the solvent in the solvent composition is small.

When the polyester, polypropylene or hydrogenated petroleum resin is melted by heat to be used as a hot-melt adhesive, film portions can be bonded to each other; however, when the adhesive is used to bond heat-shrinkable polyvinyl chloride-based film or heat-shrinkable polystyrene-based film portions to each other, the heat-shrinkable polyvinyl chloride-based film or heat-shrinkable polystyrene-based film is shrunken by heat from the hot-melt adhesive to be wrinkled, so that external appearance defects are easily generated therein. Furthermore, a high viscosity of the adhesive makes it difficult to apply a constant amount of the adhesive stably onto the polyvinyl chloride-based film or the polystyrene-based film.

In other words, the solvent composition contains both of at least one organic solvent selected from the group consisting of THF, MEK and ethyl acetate, which are good solvents, and at least one resin selected from the group consisting of polyester, polypropylene and hydrogenated petroleum resin, which function as adhesives; and this matter covers the respective drawbacks of the both. Even through a tubing step made high in speed, the resultant solvent bonded-portion of the label can exhibit a high peel strength stably. Additionally, solvent penetration-through is not easily generated even in the heat-shrinkable polyvinyl chloride-based film or heat-shrinkable polystyrene-based film made small in thickness.

Examples of a dicarboxylic acid component constituting the polyester used in the solvent composition of the present invention include, besides terephthalic acid, isophthalic acid, naphthalenedicarboxylic acid, orthophthalic acid; and other aromatic dicarboxylic acids; adipic acid, azelaic acid, sebacic acid, decanedicarboxylic acid, and other aliphatic dicarboxylic acids; and alicyclic dicarboxylic acids.

Examples of a diol component constituting the polyester used in the solvent composition include, besides ethylene glycol, 1,3-propanediol, 1,4-butanediol, neopentyl glycol, hexanediol, and other aliphatic diols; 1,4-cyclohexanedimethanol, and other alicyclic diol; and bisphenol A, and other aromatic diols.

The polyester used in the solvent composition of the present invention is preferably a polyester into which one or more of the following are incorporated to have a glass transition temperature (Tg) of 70°C or less: aromatic dicarboxylic acids such as isophthalic acid; aliphatic dicarboxylic acids such as adipic acid; cyclic diols such as 1,4-cyclohexanedimethanol; and diols each having three or more carbon atoms (such as 1,3-propanediol, 1,4-butanediol, neopentyl glycol, and hexanediol).

About the polyester used in the solvent composition, the total proportion of the one or more monomer components, which can turn one or more amorphous components, is 30% or more, preferably 40% or more, more preferably 50% or more by mole in 100% by mole of the polycarboxylic acid component(s) or 100% by mole of polyhydric alcohol(s) in the whole polyester resin.

If the total proportion of the monomer component(s), which can turn the amorphous component(s), is less than 300 by mole, the polyester becomes low in solubility in the above-mentioned organic solvent(s) so that the solvent composition cannot be used as a bonding solvent. Examples of the monomer component(s), which can turn the amorphous component(s), include isophthalic acid, orthophthalic acid, adipic acid, sebacic acid, 1,4-cyclohexanedimethanol, neopentyl glycol, 1,3-propanediol, 1,4-butanediol, and hexanediol.

The upper limit of at least one resin contained in the solvent composition of the present invention and selected from the group consisting of polyester, polypropylene and hydrogenated petroleum resin is 40% or less, preferably 37% or less, more preferably 34% or less by weight. This is for the following reason: when the content of the resin contained in the solvent composition is larger, the solvent composition becomes higher in viscosity; thus, in the tubing step made high in speed, it is difficult that the solvent composition is stably applied onto a polyvinyl chloride-based film in a constant amount. Moreover, the lower limit of the content of the resin contained in the solvent composition is 50 or more, preferably 8% or more by weight. If the content of the resin contained in the solvent composition is less than 5% by weight, the resultant solvent bonded-portion is short in peel strength when the applied amount of THF or the like becomes small.

As required, the following may be added to the solvent composition of the present invention: various additives, a viscosity reducer, a heat stabilizer, a coloring pigment, a coloring inhibitor, an ultraviolet absorber, and others.

The lower limit of the viscosity of the solvent composition is not particularly limited. However, if the viscosity is too high, it is difficult to apply a constant amount of the composition stably in the tubing step made high in speed. Thus, the viscosity is preferably less than 100 mPa·s. The viscosity of the solvent composition is more preferably 80 mPa·s or less, even more preferably 60 mPa·s or less, in particular preferably 50 mPa·s or less.

In the tubing step, it is preferred to use, for example, a known center seal machine to apply the solvent composition onto a heat-shrinkable polyvinyl chloride-based film or heat-shrinkable polystyrene-based film at about 50 to 550 mg/m$^2$. In the tubing step, the application width of the bonding solvent composition is preferably 1 mm or more in order to restrain a peel of the bonded-portion from each other. The upper limit thereof is not particularly limited. The width is preferably 10 mm or less since costs becomes lower as the area of the label to be used is smaller.

The speed of the tubing step is not particularly limited, and is preferably from 300 to 500 m/minute to make the step higher in speed. Usually, after the tubing step, the tubular label is folded into a flat form and wound into a roll form, and subsequently the label is unwound and cut into a predetermined length. In this way, a final product is obtained. However, after the tubing step, the label may be subjected to a cutting step without being wound into a roll.

About the heat-shrinkable label of the present invention, the peel strength of its solvent bonded-portion is 2 N/15mm or more, preferably 3 N/15mm or more, more preferably 4 N/15mm or more. When the peel strength is 2 N/15mm or more, the label can be prevented from being peeled when used, and other troubles can be prevented. The upper limit of the peel strength of the solvent bonded-portion is less than 10 N/15mm. This is because the present invention has not been able to realize a peel strength of 10 N/15mm or more although the solvent bonded-portion is more preferred as the portions have a higher peel strength. A method for measuring the peel strength is according to a method described in item EXAMPLES.

The thickness of the heat-shrinkable polyvinyl chloride-based film or heat-shrinkable polystyrene-based film, which constitutes the heat-shrinkable label of the present invention, is preferably from 5 to 50 um both inclusive. The thickness is more preferably 30 um or less in order that the label can cope with a request of making heat-shrinkable labels thinner. In the label, a printed layer may be laid on its portion other than its bonded-portion.

About the heat-shrinkable label of the invention, the heat shrinkage percentage is 40% or more in a main shrinkage direction thereof after the label is in hot water of 90°C temperature for 10 seconds. When the heat shrinkage percentage is 40% or more, the label can gain a beautiful shrunken-finish. If the percentage is less than 40%, the label is short in heat shrinkage force. Thus, when the label covers a container or some other to be shrunken thereto, the label does not adhere closely to the container so that an external appearance is unfavorably generated therein. In a direction orthogonal to the main shrinkage direction, the heat shrinkage percentage is preferably 150 or less in hot water of 90°C temperature. If the heat shrinkage percentage is more than 15%, the label unfavorably undergoes a phenomenon called end-tightening easily, which is a phenomenon that the label is shrunken in a longitudinal direction thereof. The heat shrinkage percentage in the main shrinkage direction means the heat shrinkage percentage in a direction along which a sample of the film is shrunken most largely, and is determined by the length of the sample, which has been made square, in a longitudinal direction or a transverse direction thereof. A method for measuring the heat shrinkage percentage (%) is according to a method described in item EXAMPLES.

The structure of the polyvinyl chloride-based resin constituting the heat-shrinkable label of the present invention is not particularly limited as long as the structure can exhibit heat-shrinkage properties that will be detailed later. Examples of the resin include polyvinyl chloride having a number average polymerization degree from about 800 to 2500, preferably from about 1000 to 1800, and copolymers each made mainly of vinyl chloride (for example, ethylene/vinyl chloride copolymer, vinyl acetate/vinyl chloride copolymer, and vinyl chloride/halogenated olefin copolymer) ; and blends each composed of any one of such polyvinyl chloride and vinyl chloride copolymers, as a main component, and a different compatible resin (for example, polyester resin, epoxy resin, acrylic resin, vinyl acetate resin, urethane resin, acrylonitrile/styrene/butadiene copolymer, or partially saponified polyvinyl alcohol). These vinyl chloride resins may each be yielded by any ordinarily-used producing method, such as lump polymerization, emulsion polymerization, suspension polymerization, or solution polymerization.

These vinyl chloride resins may be used singly or in any combination of two or more thereof.

In addition, conventionally, into a heat-shrinkable vinyl chloride resin film, a small amount of a plasticizer is blended to improve the flexibility of the film, the low-temperature shrinkage of a stretched film of the film, and the flowability and stretching workability of the resin when the resin is extrusion-worked.

Examples of the plasticizer used in the present invention include phthalic acid derivatives such as di-n-octyl phthalate, di-2-ethylhexyl phthalate, diisononyl phthalate, diisodecyl phthalate, and dicyclohexyl phthalate; isophthalic acid derivatives such as diisooctyl isophthalate; adipic acid derivatives such as dioctyl adipate; and tricresyl phosphate, trixylenyl phosphate, and epoxidized soybean oil.

These plasticizers may be used singly or in any combination of two or more thereof. The plasticizer(s) is/are contained in the heat-shrinkable vinyl chloride-based film in a proportion preferably from 20 to 40% both inclusive by weight of the film, more preferably from 25 to 35% both inclusive by weight thereof.

As far as the object of the present invention is not damaged, various additive components may be blended into the present invention, examples of the components including a modifier, a heat stabilizer, a filler, an ultraviolet absorber, an antioxidant, an anti-tackiness agent, an antistatic agent, and a coloring agent.

Examples of the modifier include methyl methacrylate/butadiene/styrene terpolymer (MBS resin), acrylonitrile/butadiene/styrene terpolymer (ABS resin), ethylene/vinyl acetate copolymer, and chlorinated polyethylene. Examples of the heat stabilizer include organic tin mercaptide-based, organic tin maleate-based, organic tin carboxylate-based, metal soap-based, lead-based, Ba-Zn-based, Ca-Zn-based, Ca-Zn-Ba-based, Ba-Mg-Al-based, and epoxy compound-based chelators; and organic phosphite chelators.

Examples of the filler include silica, talc, aluminum hydroxide, hydrotalcite, calcium sulfate, calcium silicate, calcium hydroxide, magnesium hydroxide, kaolin clay, mica, alumina, magnesium carbonate, sodium aluminate, and lithium phosphate. Examples of the ultraviolet absorbent include benzotriazole-based, benzophenone-based, and salicylic acid-based agents.

The vinyl chloride resin composition for shaping the heat-shrinkable polyvinyl chloride-based film of the present invention can be prepared by using the above-mentioned vinyl chloride resin, plasticizer, and various optionally-used additive components at respective predetermined proportions, and blending these components into a homogeneous form, using a blending machine or kneading machine, such as a ribbon blender, a Banbury mixer, a Henschel mixer, a super mixer, a uniaxial or biaxial extruder, or a roll.

The structure of the polystyrene-based resin contained in the heat-shrinkable label of the present invention is not particularly limited as far as the structure makes it possible to exhibit heat-shrinkage properties that will be detailed later. The polystyrene-based resin is preferably a polystyrene-based resin including a polystyrene-based resin having a syndiotactic structure. The polystyrene-based resin is more preferably a polystyrene-based resin having a syndiotactic structure. The use of the polystyrene-based resin having a syndiotactic structure improves the resultant label in mechanical strength and heat resistance. The use of such a polystyrene-based resin is advantageous for separating the resin in a recycling step since the polystyrene is low in density. Additionally, the use decreases a change of printed matters on the film in print pitch after the formation of the film, this change being based on the shrinkage of the film with time, since the resin is excellent in heat resistance, in particular when the film is heated and stored. Thus, highly precise printing can be applied to the label. The film is further improved in durability against a solvent contained in printing ink, so that the label is excellent in printability.

About the polystyrene-based resin having a syndiotactic structure, in the tacticity thereof that is obtained by determining quantitatively phenyl groups and/or substituted phenyl groups, which are side chains of the resin, through nuclear magnetic resonance, the proportion of dyads (in which the number of structural units is two) is preferably 750 or more, more preferably 85% or more. The proportion of pentads (in which the number of structural units is five) therein is preferably 30% or more, and more preferably 50% or more.

Examples of a polystyrene component contained in the polystyrene-based resin used in the present invention include polystyrene, poly(p-, m-, or o-methylstyrene), poly(2,4-, 2,5-, 3,4-, or 3,5-dimethylstyrene), and poly(p-tert-butylstyrene), and other poly(alkylstyrenes); poly(p-, m-, or o-chlorostyrene), poly(p-, m-, or o-bromostyrene), poly (p-, m-, or o-fluorostyrene), poly (o-methyl-p-fluorostyrene), and other poly(halogenated styrenes); poly(p-, m-, or o-methoxystyrene), poly(p-, m-, or o-ethoxystyrene, and other poly(alkoxystyrenes); poly(p-, m-, or o-carboxymethylstyrene) and other poly(carboxyalkylstyrenes); poly(p-vinylbenzyl propyl ether), and other poly(alkyl ether styrenes); poly(p-trimethylsilylstyrene), and other poly(alkylsilylstyrenes); and poly(vinylbenzyldimethoxyphosphide).

In the present invention, it is preferred to add a thermoplastic resin and/or a rubber component to the polystyrene-based resin. Examples of the thermoplastic resin include styrene-based resins such as polystyrene having an atactic structure, AS resin, and ABS resin; polyester-based resins such as polyethylene terephthalate, polyethylene naphthalate and polybutylene terephthalate; polyamide-based resins such as nylon 6, nylon 66, nylon 12, nylon 4, and polyhexamethylene adipamide; and polyolefin-based resins such as polyethylene, polypropylene, and polybutene.

The rubber component is preferably a rubber-form copolymer containing, as its constituent component, a styrene-based compound; and may be, for example, a random, block or graft copolymer in which one or more selected from styrene and analogs are copolymerized with one or more selected from rubber components. Examples of such a rubber-form copolymer include styrene/butadiene copolymer rubber, and styrene/isoprene block copolymer; rubbers each obtained by hydrogenating, partially or wholly, butadiene portions of one or more of these rubbers; and methyl acrylate/butadiene/styrene copolymer rubber, acrylonitrile/butadiene/styrene copolymer rubber, acrylonitrile/alkyl acrylate/butadiene/styrene copolymer rubber, and methyl methacrylate/alkyl acrylate/butadiene/styrene copolymer rubber. The rubber-form copolymer containing, as its constituent component, a styrene-based compound as described above has styrene units. Thus, the copolymer is good in dispersibility in polystyrene-based resin having a syndiotactic structure, and produces a large effect of improving the plasticity of the polystyrene-based resin.

The compatibility adjuster is preferably a rubber-form copolymer containing, as its constituent component, a styrene-based compound as described above.

Examples of the rubber component include natural rubber, polybutadiene, polyisoprene, polyisobutylene, neoprene, ethylene/propylene copolymer rubber, urethane rubber, silicone rubber, acrylic rubber, polyether/ester rubber, and polyester/ester rubber.

The weight-average molecular weight of the polystyrene-based resin is preferably 10,000 or more, more preferably 50,000 or more. When the weight-average molecular weight is less than 10,000, the polystyrene-based resin unfavorably lowers the film easily in stretch properties and heat resistance. The upper limit of the weight-average molecular weight is not particularly limited. If the weight-average molecular weight is more than 1,500,000, the film may unfavorably suffer from breaking and other troubles, which follow an increase of the film in orientation tension.

Polystyrene-based resins having various grades are commercially available from various manufacturers. Thus, the polystyrene-based resin may be a commercially available product. The label may have one or more different layers.

The heat shrinkable polyvinyl chloride-based film constituting the heat shrinkable label of the present invention can be yielded by using an extruder to melt-extrude the above-mentioned polyvinyl chloride raw material to form an unstretched film; stretching the unstretched film transversely by a predetermined method described below; and then subjecting the resultant to heat treatment. In the case of laminating films onto each other, it is advisable to use a plurality of extruders, a feed block, or a multi-manifold.

When the raw material resin is melt-extruded, an extruder is used to melt the polyvinyl chloride raw material at a temperature of 150 to 200°C, so as to be extruded into a film. At the time of the extrusion, any already-existing method, such as a T-die method and a tubular method, can be adopted.

By cooling the extruded sheet-form melted resin rapidly, an unstretched film can be yielded. The method for cooling the melted resin rapidly is preferably a method of casting the melted resin from a mouthpiece onto a rotary drum to cool the resin rapidly to be solidified to yield a substantially non-oriented resin sheet.

The yielded unstretched film is preheated at a temperature from 80 to 120°C, preferably from 90 to 110°C as required, and then stretched in a transverse direction of the film (direction orthogonal to the film-extruded direction) 3.0 times or more, preferably 3.5 times or more and 7 times or less through, for example, a tenter.

The stretching temperature is from 70 to 110°C both inclusive, more preferably from 80 to 100°C both inclusive. After the transverse stretching, the resultant is preferably subjected to heat treatment at a temperature 1 to 30°C higher than the stretching temperature. The heat treatment is conducted to relieve a tension state of the film after the stretching. The heat treatment produces an advantageous effect also for adjusting the heat shrinkage percentage at the temperature during the heat treatment, and for reducing the natural shrinkage percentage. In this way, a heat-shrinkable polyvinyl chloride-based film is obtained which constitutes the heat-shrinkable label of the present invention.

The heat-shrinkable polystyrene-based film constituting the heat-shrinkable label of the present invention can be yielded by using an extruder to melt-extrude the above-mentioned polystyrene raw material to form an unstretched film; stretching the unstretched film longitudinally or transversely by a predetermined method described below; and then subjecting the resultant to heat treatment. In the case of laminating films onto each other, it is advisable to use a plurality of extruders, a feed block, or a multi-manifold. Usually, two or more polystyrene chip species are mixed with each other, and the mixture is used as the raw material of the film(s). In the case of laminating the films onto each other, it is advisable to use a plurality of extruders.

When the raw material resin is melt-extruded, an extruder is used to melt-extrude the polystyrene raw material at a temperature of 200 to 250°C to be extruded into a film form. At the time of the extrusion, any already-existing method, such as a T-die method and a tubular method, can be adopted.

By cooling the extruded sheet-form melted resin rapidly, an unstretched film can be yielded. The method for cooling the melted resin rapidly is preferably a method of casting the melted resin from a mouthpiece onto a rotary drum to cool the resin rapidly to be solidified to yield a substantially non-oriented resin sheet.

The resultant unstretched film is heated at 70 to 100°C, preferably at 80 to 90°C on rolls as required, and then stretched longitudinally 1.1 to 1.8 times, using a roll speed difference. The resultant longitudinally stretched film is preheated at 80 to 120°C, preferably at 90 to 110°C as required, and then stretched in the transverse direction (direction orthogonal to the film-extruding direction) 3.0 times or more, preferably 3.5 times or more and 7 times or less through, for example, a tenter. The stretching temperature is from 70 to 100°C both inclusive, preferably from 70 to 95°C both inclusive.

After the transverse stretching, the resultant is preferably subjected to heat treatment at a temperature 1 to 30°C higher than the stretching temperature. The heat treatment is conducted to relieve a tension state of the film after the stretching. The heat treatment produces an advantageous effect also for adjusting the heat shrinkage percentage at the temperature during the heat treatment, and for reducing the natural shrinkage percentage. In this way, a heat-shrinkable polystyrene-based film is yielded which constitutes the heat-shrinkable label of the present invention.

The heat-shrinkable polyvinyl chloride-based film or the heat-shrinkable polystyrene-based film in the present invention can be made into a label form by a conventional method. In an example, suitable printing is applied onto a heat-shrinkable polyvinyl chloride-based film or heat-shrinkable polystyrene-based film cut into a desired width, and then right and left end portions (both end portions) of the film are overlapped and bonded with each other through the above-defined solvent composition to produce a tube film. This tube film is cut into an appropriate length to form a tubular label. An organic solvent for bonding includes, as an essential component thereof, one or more organic solvents selected from the group consisting of tetrahydrofuran (THF), methyl ethyl ketone (MEK)), and ethyl acetate. Furthermore, the following may be used: an aromatic hydrocarbon, such as benzene, toluene, xylene, or trimethylbenzene; a halogenated hydrocarbon, such as methylene chloride and chloroform; phenol or any phenol analog; or a mixture of these solvents.

After the label is perforated by a known method, a PET bottle is covered with the label and then the PET bottle is placed on a belt conveyor or the like and passed in/through a shrinking tunnel of a steam-blowing type (steam tunnel) or a shrinking tunnel of a hot-wind-blowing type (hot wind tunnel). While the label is passed through any one of these tunnels, the label is thermally shrunken so that the label is fitted onto the PET bottle or some other bottle container.

The package of the present invention is preferably a product formed by covering at least one portion of the periphery of a packaging object with a perforated or notched label yielded from the heat-shrinkable polyvinyl chloride-based film or heat-shrinkable polystyrene-based film in the invention, and then heat-shrinking the resultant. Examples of the packaging object include, besides PET bottles for drinks, various bottles; cans; plastic containers for confectionery, lunch boxes and others; and paper boxes. Usually, when the label obtained from the heat-shrinkable polyvinyl chloride-based film is heat-shrunken to cover the packaging object, the label is heat-shrunk onto the packaging object by about 5 to 70% to bring the label into close contact with the package. Printing or no printing may be applied to the label, with which the packaging object is covered.

EXAMPLES

The present invention will be described in more detail hereinafter by way of working examples thereof. However, the examples, which will be described below, are not intended to limit the invention. When any change or modification is made in such examples, the changed or modified examples are included in the invention as far as the examples do not depart from the subject matters of the invention. The following describes methods for measuring physical properties of any film obtained in each of the working examples and comparative examples:

[Hot Water Shrinkage Percentage]

The film is cut into a square of 10 cm length along the longitudinal direction thereof and 10 cm length along a direction orthogonal thereto (width direction), and then the cut film is immersed in hot water of 90°C ± 0.5°C for 10 seconds under no load state to heat-shrink the cut film. Immediately after the immersion, this sample is immersed in water of 25°C ± 0.5°C for 10 seconds. Thereafter, the sample is pulled out from the water to measure the respective lengths of the sample in the longitudinal and transverse directions thereof. Each of the hot water shrinkage percentages of the sample is gained according to the following expression:

$$\text{Shrinkage percentage} = \{(\text{``the length of the sample before the shrinkage''} - \text{``the length after the shrinkage''})/\text{``the length before the shrinkage''}\} \times 100 \ (\%).$$

In any one of the examples, the direction of the film which shows the largest shrinkage percentage (main shrinkage direction) is the width direction thereof.

[Glass Transition Temperature (Tg)]

The glass transition temperature of a sample is gained in accordance with JIS K 7121 using a differential scanning calorimeter (model: DSC 220) manufactured by Seiko Instruments Inc. At a temperature-raising rate of 10°C/minute, 10 mg of an unstretched film of the example is raised in temperature from 25 to 120°C to gain a temperature-rising profile of the film. The temperature of the following is defined as the glass transition temperature: an intersection of an extended line from a base line of the profile, in a range of the glass transition temperature and lower, with the tangential line showing a maximum inclination in a transition range of the profile.

[Solvent Bonding Method]

While the film is cut into a width of 380 mm, a winding length of the film is adjusted into 1000 m in the longitudinal direction to produce a film roll. From this film roll, the film is unwound to apply a bonding solvent composition continuously onto a portion of the film inside a single end portion of the film in the width direction to give an application width in a range of $4 \pm 2$ mm. This solvent-composition-applied portion is folded and piled up onto the other end portion of the film in the width direction to position the resultant folded and piled portions at the center of the folded film. In this way, both the end portions are solvent bonded to each other.

The solvent-bonding working speed is set to 400 m/minute, and the solvent bonded film is wound onto a paper tube at the same speed. The resultant tubular label roll is aged in an atmosphere of 23°C temperature for 24 hours.

The applied amount of the solvent is arbitrarily adjusted.

[Bonding Solvent Composition Viscosity]

A B-type viscometer (model: BASE L) manufactured by ATAGO CO., LTD. is used to measure the viscosity of a bonding solvent composition under condition at a temperature of 23°C and a rotation speed of 10 rpm.

[Evaluation of Solvent Penetration-Through]

A tubular label of a winding length of 1000 m obtained by solvent bonding is aged in an environmental test chamber at 30°C and a humidity of 80% for 336 hours (14 days). Thereafter, the label is pulled out by 500 m from the surface of the roll. When the label suffers from a blocking phenomenon, it is determined that the solvent penetrates through the label, and then an evaluation is made as follows:

No blocking is caused: good (∘) solvent penetration-through evaluation (no generation of penetration-through); and
Blocking is caused: bad (×) solvent penetration-through evaluation (generation of penetration-through).

[Method for Measuring Peel Strength of Solvent Bonded-Portion]

In the solvent penetration-through evaluation described above, the label is pulled out by 500 m from the surface layer of the roll. Thereafter, from a portion of the surface layer of the tubular label roll having the winding length of 500 m, each sample having a width (corresponding to a length in the longitudinal direction) of 15 mm is cut out along the circumferential direction to position the solvent bonded-portion at the center of the label (the length is sufficient to be about 100 mm). The number "n" of the samples is 10. Each of the samples is set to a universal tensile tester "STM-50" manufactured by Baldwin Corporation, to make a 180° peel test at a tensile speed of 200 mm/minute. The average of values of the 10 samples is determined as the peel strength (N/15mm) of their solvent bonded-portion.

<Synthesis Examples of Polyesters A to C>

Into a stainless steel autoclave equipped with a stirrer, a thermometer and a partially-refluxing-type condenser were charged 100% by mole of dimethyl terephthalate (DMT) as a dicarboxylic acid component and 100% by mole of ethylene glycol (EG) as a polyhydric alcohol to set the mole number of ethylene glycol to a value 2.2 times that of dimethyl terephthalate. Zinc acetate was used as an ester exchange catalyst in an amount of 0.05% by mole (to the acid component) to conduct an ester interchange reaction while distilling off generated methanol to the outside of the system. Thereafter, thereto was added antimony trioxide, as a polycondensation catalyst, in an amount of 0.225% by mole (to the acid component). The polymerizable components were subjected to polycondensation reaction at 280°C under a reduced pressure condition of 26.7 Pa to yield each of polyesters A, B and C shown in Table 2.

In the table, TPA is terephthalic acid; IPA, isophthalic acid; AA, acrylic acid; SA, sebacic acid; EG, ethylene glycol; CHDM, 1,4-cyclohexanedimethanol; NPG, neopentyl glycol; and BD, 1,4-butanediol. About the respective intrinsic viscosities of the polyesters in Table 2, the viscosities of the polyesters A, B and C were 0.53 dL/g, 0.98 dL/g and 0.89 dL/g, respectively. For reference, each of the polyesters was appropriately made into a chip form.

<Polypropylene and Hydrogenated Petroleum Resin>

The following polypropylene and hydrogenated petroleum resin were used:

Polypropylene: L-MODU, product name S-901, manufactured by Idemitsu Kosan Co., Ltd.; and
Hydrogenated petroleum resin: I-MARV, product name P-140, manufactured by Idemitsu Kosan Co., Ltd.

<Method for Manufacturing Heat-Shrinkable Polyvinyl Chloride-Based Film>

The following were mixed with each other to prepare a vinyl chloride-based resin composition for film-forming: 60% by weight of a vinyl chloride-based resin (average polymerization degree: 1300); 30% by weight of a phthalic acid ester-based plasticizer; 6% by weight of MBS resin; 2% by weight of a barium-zinc-based composite stabilizer; 1% by weight of polymethyl methacrylate resin; and 1% by weight of ethylene bis stearamide. This raw material formulation is shown in Table 1. The vinyl chloride-based resin composition was melted and extruded from a T-die of a uniaxial extruder to yield an unstretched film. The temperature of the extruder and the T-die was adjusted to 200°C. Moreover, in order to stabilize the extrusion from the T-die, a helical-type and parallel-type gear pump was interposed between the extruder and the T-die. At this time, the pulling-out speed of the unstretched film (the rotation speed of the metal rolls) was about 20 m/minute. The surface temperature of the metal rolls was about 20°C, and the thickness of the resultant unstretched film was 75 um.

The resultant unstretched film was heated to 100°C in a preheating zone, and stretched five times in the width direction in a stretching zone adjusted to a set temperature of 80°C. Subsequently, the film was subjected to heat treatment at 88°C for 5 seconds, and then cooled. Both edges of the film were cut and removed, and the film was wound into the form of a roll having a width 500 mm to produce continuously a uniaxially stretched film having a thickness of 15 μm in a length of 1100 m. The resultant film was a heat-shrinkable polyvinyl chloride-based film which was heat-shrinkable only in the width direction. The hot water shrinkage percentage measured at 90°C is shown in Table 3.

[Table 1]

| Polyvinylchloride-based resin composition | | |
|---|---|---|
| Raw materials/additives | Manufacturer, product name | Percent by weight |
| Polyvinylchloride-based resin | TK-1300 manufactured by Shin-Etsu Chemical Co., Ltd., average polymerization degree: 1300 | 60 |
| Phthalate-based plasticizer | DOP, manufactured by Mitsubishi Chemical Corp. | 30 |
| MBS resin | Kane Ace B-22, manufactured by Kaneka Corp. | 6 |
| Barium-zinc-based complex stabilizer | PSL-55, manufactured by Nitto Chemicals Co., Ltd. | 2 |
| Polymethyl methacrylate resin | Kane Ace PA-20, manufactured by Kaneka Corp. | 1 |
| Ethylene bis stearamide (lubricant) | Alflow H-50S, manufactured by JOF Corp. | 1 |

[Table 2]

| | Polyester raw material composition (% by mole) | | | | | | | | Glass transition temperature (°C) | Intrinsic viscosity (dl/g) |
|---|---|---|---|---|---|---|---|---|---|---|
| | Dicarboxylic acid components | | | | Glycol components | | | | | |
| | TPA | IPA | AA | SA | EG | CHDM | NPG | BD | | |
| Polyester A | 50 | 50 | - | - | 50 | - | 50 | - | 67 | 0.53 |

(continued)

| | Polyester raw material composition (% by mole) | | | | | | | | Glass transition temperature (°C) | Intrinsic viscosity (dl/g) |
|---|---|---|---|---|---|---|---|---|---|---|
| | Dicarboxylic acid components | | | | Glycol components | | | | | |
| | TPA | IPA | AA | SA | EG | CHDM | NPG | BD | | |
| Polyester B | 60 | 10 | - | 30 | 57 | - | 43 | - | 10 | 0.98 |
| Polyester C | 60 | 5 | 35 | - | 22 | 44 | - | 34 | -20 | 0.89 |

[Table 3]

| | Layer | Transverse stretching step | | | | Thickness | Hot water shrinkage percentage (%) at measuring temperature of 90°C | |
|---|---|---|---|---|---|---|---|---|
| | | Preheating temperature (°C) | Stretching temperature (°C) | Magnification (times) | Final heating treatment temperature (°C) | (um) | Longitudinal direction | Width direction |
| Film | Monolayer | 100 | 80 | 5 | 88 | 15 | 0 | 56 |

[Example 1]

THF and the polyester A were mixed with each other at 90/10 (THF/polyester A ratio by weight). The resultant solvent composition was applied onto the heat-shrinkable polyvinyl chloride-based film to give a width of 4 mm and an amount of 300 mg/m$^2$. The resultant was subjected to solvent bonding at a processing speed of 400 m/minute to yield a tubular label roll. By the above-mentioned methods, the label was measured as to whether or not solvent penetration-through was caused, and about the peel strength of the solvent bonded-portion. In Table 4 are shown conditions for the solvent bonding, and the results. The label was a good label about which no solvent penetration-through was caused, and the peel strength of the solvent bonded-portion was large.

[Example 2]

A tubular label roll was yielded in the same way as in Example 1 except that the solvent/resin-mixed composition was rendered one yielded by mixing MEK and the polyester A at 90/10 (ratio by weight).
In Table 4 are shown conditions for the solvent bonding, and the results. The label was a good label about which no solvent penetration-through was caused, and the peel strength of the solvent bonded-portion was large.

[Example 3]

A tubular label roll was yielded in the same way as in Example 1 except that the solvent/resin-mixed composition was rendered one yielded by mixing ethyl acetate and the polyester A at 90/10 (ratio by weight). In Table 4 are shown conditions for the solvent bonding, and the results. The label was a good label about which no solvent penetration-through was caused, and the peel strength of the solvent bonded-portion was large.

[Example 4]

THF and the polyester B were mixed with each other at 80/20 (THF / polyester B ratio by weight). The resultant solvent composition was applied onto the heat-shrinkable polyvinyl chloride-based film to give a width of 4 mm and an amount of 300 mg/m$^2$. The resultant was subjected to solvent bonding at a processing speed of 400 m/minute to yield a tubular label roll. By the above-mentioned methods, the label was measured as to whether or not solvent penetration-through was caused, and about the peel strength of the solvent bonded-portion. In Table 4 are shown conditions for the solvent bonding, and the results. The label was a good label about which no solvent penetration-through was caused, and the peel strength of the solvent bonded-portion was large.

[Example 5]

THF and the polyester C were mixed with each other at 95/5 (THF / polyester C ratio by weight). The resultant solvent composition was applied onto the heat-shrinkable polyvinyl chloride-based film to give a width of 4 mm and an amount of 300 mg/m$^2$. The resultant was subjected to solvent bonding at a processing speed of 400 m/minute to yield a tubular label roll. By the above-mentioned methods, the label was measured as to whether or not solvent penetration-through was caused, and about the peel strength of the solvent bonded-portion. In Table 4 are shown conditions for the solvent bonding, and the results. The label was a good label about which no solvent penetration-through was caused, and the peel strength of the solvent bonded-portion was large.

[Example 6]

Ethyl acetate and the polyester A were mixed with each other at 60/40 (ethyl acetate / polyester A ratio by weight). The resultant solvent composition was applied onto the heat-shrinkable polyvinyl chloride-based film to give a width of 4 mm and an amount of 100 mg/m$^2$. The resultant was subjected to solvent bonding at a processing speed of 400 m/minute to yield a tubular label roll. By the above-mentioned methods, the label was measured as to whether or not solvent penetration-through was caused, and about the peel strength of the solvent bonded-portion. In Table 4 are shown conditions for the solvent bonding, and the results. The label was a good label about which no solvent penetration-through was caused, and the peel strength of the solvent bonded-portion was large.

[Example 7]

Ethyl acetate and the polyester A were mixed with each other at 80/20 (ethyl acetate / the polyester A ratio by weight). The resultant solvent composition was applied onto the heat-shrinkable polyvinyl chloride-based film to give a width of 4 mm and an amount of 500 mg/m$^2$. The resultant was subjected to solvent bonding at a processing speed of 400 m/minute to yield a tubular label roll. By the above-mentioned methods, the label was measured as to whether or not solvent penetration-through was caused, and about the peel strength of the solvent bonded-portion. In Table 4 are shown conditions for the solvent bonding, and the results. The label was a good label about which no solvent penetration-through was caused, and the peel strength of the solvent bonded-portion was large.

[Comparative Example 1]

A tubular label roll was yielded in the same way as in Example 6 except that a bonding solvent made only of ethyl acetate was used. In Table 4 are shown conditions for the solvent bonding, and the results. The label was an unfavorable label having solvent bonded-portion low in peel strength.

[Comparative Example 2]

Only ethyl acetate was applied onto the heat-shrinkable polyvinyl chloride-based film to give a width of 4 mm and an amount of 600 mg/m$^2$. The resultant was subjected to solvent bonding at a processing speed of 400 m/minute to yield a tubular label roll. By the above-mentioned methods, the label was measured as to whether or not solvent penetration-through was caused, and about the peel strength of the solvent bonded-portion. In Table 4 are shown conditions for the solvent bonding, and the results. The label was an unfavorable label having solvent bonded-portion large in peel strength but suffering from solvent penetration-through (blocking).

[Comparative Example 3]

THF and the polyester C were mixed with each other at 40/60 (THF / polyester C ratio by weight). An attempt was made for yielding a tubular label roll in the same way as in Example 1 except that this solvent composition was used. In Table 4 are shown conditions for the solvent bonding, and the results. The solvent composition was too high in viscosity, so that this bonding solvent composition was unable to be applied onto the film to give a width of 4 mm and an amount of 1 g/m$^2$ or less.

[Table 4]

| | Bonding solvent composition (% by weight) | | | | | | Bonding solvent composition applied amount (mg/m²) | Solvent bonding Processing speed (m/minute) | Bonding solvent composition viscosity (mPa·s) | Solvent penetration-through (blocking) | Solvent-bonded portion peel strength (N/15mm) |
|---|---|---|---|---|---|---|---|---|---|---|---|
| | THF | MEK | Ethyl acetate | Polyester A | Polyester B | Polyester C | | | | | |
| Example 1 | 90 | - | - | 10 | - | - | 300 | 400 | 8 | ○ | 4.5 |
| Example 2 | - | 90 | - | 10 | - | - | 300 | 400 | 8 | ○ | 4.0 |
| Example 3 | - | - | 90 | 10 | - | - | 300 | 400 | 8 | ○ | 4.0 |
| Example 4 | 80 | - | - | - | 20 | - | 300 | 400 | 9 | ○ | 5.0 |
| Example 5 | 95 | - | - | - | - | 5 | 300 | 400 | 7 | ○ | 3.8 |
| Example 6 | - | - | 60 | 40 | - | - | 100 | 400 | 45 | ○ | 2.4 |
| Example 7 | - | - | 80 | 20 | - | - | 500 | 400 | 11 | ○ | 10.0 |
| Comparative Example 1 | - | - | 100 | - | - | - | 100 | 400 | 6 | ○ | 1.9 |
| Comparative Example 2 | - | - | 100 | - | - | - | 600 | 400 | 6 | × | 10.0 |
| Comparative Example 3 | 40 | - | - | - | - | 60 | - | Unable to be applied | 100 or more | - | - |

[Example 8]

THF and the polypropylene (S-901) were mixed with each other at 90/10 (THF / polypropylene ratio by weight). The resultant solvent composition was applied onto the heat-shrinkable polyvinyl chloride-based film to give a width of 4 mm and an amount of 300 mg/m$^2$. The resultant was subjected to solvent bonding at a processing speed of 400 m/minute to yield a tubular label roll. By the above-mentioned methods, the label was measured as to whether or not solvent penetration-through was caused, and about the peel strength of the solvent bonded-portion. In Table 5 are shown conditions for the solvent bonding, and the results. The label was a good label about which no solvent penetration-through was caused, and the peel strength of the solvent bonded-portion was large.

[Example 9]

A tubular label roll was yielded in the same way as in Example 8 except that the solvent/resin-mixed composition was rendered one yielded by mixing MEK and the product S-901 with each other at 90/10 (ratio by weight). In Table 5 are shown conditions for the solvent bonding, and the results. The label was a good label about which no solvent penetration-through was caused, and the peel strength of the solvent bonded-portion was large.

[Example 10]

A tubular label roll was yielded in the same way as in Example 8 except that the solvent/resin-mixed composition was rendered one yielded by mixing ethyl acetate and the product S-901 with each other at 90/10 (ratio by weight).
In Table 5 are shown conditions for the solvent bonding, and the results. The label was a good label about which no solvent penetration-through was caused, and the peel strength of the solvent bonded-portion was large.

[Example 11]

Ethyl acetate and the hydrogenated petroleum resin (P-140) were mixed with each other at 95/5 (ethyl acetate / hydrogenated petroleum resin ratio by weight). The resultant solvent composition was applied onto the heat-shrinkable polyvinyl chloride-based film to give a width of 4 mm and an amount of 300 mg/m$^2$. The resultant was subjected to solvent bonding at a processing speed of 400 m/minute to yield a tubular label roll. By the above-mentioned methods, the label was measured as to whether or not solvent penetration-through was caused, and about the peel strength of the solvent bonded-portion. In Table 5 are shown conditions for the solvent bonding, and the results. The label was a good label about which no solvent penetration-through was caused, and the peel strength of the solvent bonded-portion was large.

[Example 12]

Ethyl acetate and the product S-901 were mixed with each other at 70/30 (ethyl acetate / S-901 ratio by weight). The resultant solvent composition was applied onto the heat-shrinkable polyvinyl chloride-based film to give a width of 4 mm and an amount of 300 mg/m$^2$. The resultant was subjected to solvent bonding at a processing speed of 400 m/minute to yield a tubular label roll. By the above-mentioned methods, the label was measured as to whether or not solvent penetration-through was caused, and about the peel strength of the solvent bonded-portion. In Table 5 are shown conditions for the solvent bonding, and the results. The label was a good label about which no solvent penetration-through was caused, and the peel strength of the solvent bonded-portion was large.

[Example 13]

Ethyl acetate and the product S-901 were mixed with each other at 70/30 (ethyl acetate / S-901 ratio by weight). The resultant solvent composition was applied onto the heat-shrinkable polyvinyl chloride-based film to give a width of 4 mm and an amount of 100 mg/m$^2$. The resultant was subjected to solvent bonding at a processing speed of 400 m/minute to yield a tubular label roll. By the above-mentioned methods, the label was measured as to whether or not solvent penetration-through was caused, and about the peel strength of the solvent bonded-portion. In Table 5 are shown conditions for the solvent bonding, and the results. The label was a good label about which no solvent penetration-through was caused, and the peel strength of the solvent bonded-portion was large.

[Comparative Example 4]

THF and the product P-140 were mixed with each other at 40/60 (THF / P-140 ratio by weight). An attempt was made for yielding a tubular label roll in the same way as in Example 1 except that this solvent composition was used. In Table 3 are shown conditions for the solvent bonding, and the results. The solvent composition was too high in viscosity, so that this bonding solvent composition was unable to be applied onto the film to give a width of 4 mm and an amount of 1 g/m$^2$ or less.

[Table 5]

| | Bonding solvent composition (% by weight) | | | | | Bonding solvent composition applied amount (mg/m²) | Solvent bonding processing speed (m/ minute) | Bonding solvent composition viscosity (mPa·s) | Solvent penetration- through (blocking) | Solventbonded portion peel strength (N/ 15mm) |
|---|---|---|---|---|---|---|---|---|---|---|
| | THF | MEK | Ethyl Acetate | Polypropylene (S-901) | Hydrogenated petroleum resin (S-140) | | | | | |
| Example 8 | 90 | - | - | 10 | - | 300 | 400 | 12 | ○ | 4.9 |
| Example 9 | - | 90 | - | 10 | - | 300 | 400 | 12 | ○ | 4.4 |
| Example 10 | - | - | 90 | 10 | - | 300 | 400 | 12 | ○ | 4.4 |
| Example 11 | - | - | 95 | - | 5 | 300 | 400 | 10 | ○ | 1.2 |
| Example 12 | - | - | 70 | 30 | - | 300 | 400 | 30 | ○ | 8.6 |
| Example 13 | - | - | 70 | 30 | - | 100 | 400 | 30 | ○ | 2.6 |
| Comparative Example 4 | 40 | - | - | - | 60 | - | Unable to be applied | 100 or more | - | - |

<Method for Manufacturing Heat-Shrinkable Polystyrene-Based Film>

Blender machines were used to pre-dry chips 1, 2 and 3, respectively, and then the chips 1, 2 and 3 were separately and continuously supplied to a blending mixer through constant-quantity screw feeders. The respective supplied amount proportions of the chips 1, 2, and 3 were set to 43% by mass, 43% by mass, and 14% by mass. Details of these raw material chips are shown in Table 6. Thereafter, the mixed material of the chips 1,2 and 3 mixed in the blending mixer was continuously and separately into a hopper just above an extruder through a constant-quantity screw feeder. The supplied chips 1, 2 and 3 (already mixed with each other) were melted and extruded from a T die of the extruder, which was a uniaxial extruder. The temperature of the extruder was also adjusted to 200°C. In order to stabilize the extrusion from the T die, a helicaltype and parallel-type gear pump was interposed between the extruder and the T-die. At this time, the pulling-out speed of the unstretched film (the rotation speed of the metal rolls) was about 20 m/minute. The surface temperature of the metal rolls was about 20°C, and the thickness of the resultant unstretched film was 150 $\mu$m.

The film was heated by the resultant 80°C-surfacetemperature metal rolls, and then stretched 1.5 times in the longitudinal (lengthwise) direction, using a rollspeed-difference.

Next, the resultant film stretched uniaxially in the longitudinal direction was heated to 100°C in a preheating zone, and then stretched 5 times in the width direction in a stretching zone adjusted into a set temperature of 80°C. Subsequently, the film was subjected to heat treatment at 88°C for 5 seconds, and then cooled. Both edges of the film were cut and removed, and the film was wound into the form of a roll having a width 500 mm to produce continuously a transverse-uniaxially stretched film having a thickness of 20 $\mu$m in a length of 1100 m. The resultant film was a heat-shrinkable polystyrene-based film that was heat-shrinkable only in the width direction. The hot water shrinkage percentage measured at 90°C is shown in Table 7.

[Table 6]

| | Details of raw material chips | |
|---|---|---|
| | Properties | Manufacturer, product name |
| Chips 1 | Polystyrene | HH203, manufactured by PS Japan Corp. |
| Chips 2 | Styrene/butadiene block copolymer | Clearen 530L, manufactured by Denki Kagaku Kogyo K.K. |
| Chips 3 | Styrene/butadiene block copolymer | Toughprene 126, manufactured by Asahi Kasei Chemicals Corp. |

[Table 7]

| | Layer | Resin composition (% by weight) | Longitudinal stretching step | | Transverse stretching step | | | | Thickness | Hot water heat shrinkage percentage (%) at measuring temperature of 90°C | |
|---|---|---|---|---|---|---|---|---|---|---|---|
| | | | Preheating temperature | Magnification | Preheating temperature | Stretching temperature | Magnification | Final heating treatment temperature | | | |
| | | | (°C) | (times) | (°C) | (°C) | (times) | (°C) | (μm) | Longitudinal direction | Width direction |
| Film | Monolayer | Chips 1/Chips 2/Chips 3 = 43/43/14 | 80 | 1.5 | 100 | 80 | 5 | 88 | 20 | 0 | 69 |

[Example 14]

THF and the polyester A were mixed with each other at 90/10 (THF / polyester A ratio by weight). The resultant solvent composition was applied onto the heat-shrinkable polystyrene-based film to give a width of 4 mm and an amount of 250 mg/m$^2$. The resultant was subjected to solvent bonding at a processing speed of 400 m/minute to yield a tubular label roll. By the above-mentioned methods, the label was measured as to whether or not solvent penetration-through was caused, and about the peel strength of the solvent bonded-portion. In Table 8 are shown conditions for the solvent bonding, and the results. The label was a good label about which no solvent penetration-through was caused, and the peel strength of the solvent bonded-portion was large.

[Example 15]

A tubular label roll was yielded in the same way as in Example 14 except that the solvent/resin-mixed composition was rendered one yielded by mixing MEK and the polyester A at 90/10 (ratio by weight). In Table 8 are shown conditions for the solvent bonding, and the results. The label was a good label about which no solvent penetration-through was caused, and the peel strength of the solvent bonded-portion was large.

[Example 16]

A tubular label roll was yielded in the same way as in Example 14 except that the solvent/resin-mixed composition was rendered one yielded by mixing ethyl acetate and the polyester A at 90/10 (ratio by weight). In Table 8 are shown conditions for the solvent bonding, and the results. The label was a good label about which no solvent penetration-through was caused, and the peel strength of the solvent bonded-portion was large.

[Example 17]

THF and the polyester B were mixed with each other at 80/20 (THF / polyester B ratio by weight). The resultant solvent composition was applied onto the heat-shrinkable polystyrene-based film to give a width of 4 mm and an amount of 250 mg/m$^2$. The resultant was subjected to solvent bonding at a processing speed of 400 m/minute to yield a tubular label roll. By the above-mentioned methods, the label was measured as to whether or not solvent penetration-through was caused, and about the peel strength of the solvent bonded-portion. In Table 8 are shown conditions for the solvent bonding, and the results. The label was a good label about which no solvent penetration-through was caused, and the peel strength of the solvent bonded-portion was large.

[Example 18]

THF and the polyester C were mixed with each other at 95/5 (THF / polyester C ratio by weight). The resultant solvent composition was applied onto the heat-shrinkable polystyrene-based film to give a width of 4 mm and an amount of 250 mg/m$^2$. The resultant was subjected to solvent bonding at a processing speed of 400 m/minute to yield a tubular label roll. By the above-mentioned methods, the label was measured as to whether or not solvent penetration-through was caused, and about the peel strength of the solvent bonded-portion. In Table 8 are shown conditions for the solvent bonding, and the results. The label was a good label about which no solvent penetration-through was caused, and the peel strength of the solvent bonded-portion was large.

[Example 19]

Ethyl acetate and the polyester A were mixed with each other at 60/40 (ethyl acetate / polyester A ratio by weight). The resultant solvent composition was applied onto the heat-shrinkable polystyrene-based film to give a width of 4 mm and an amount of 100 mg/m$^2$. The resultant was subjected to solvent bonding at a processing speed of 400 m/minute to yield a tubular label roll. By the above-mentioned methods, the label was measured as to whether or not solvent penetration-through was caused, and about the peel strength of the solvent bonded-portion. In Table 8 are shown conditions for the solvent bonding, and the results. The label was a good label about which no solvent penetration-through was caused, and the peel strength of the solvent bonded-portion was large.

[Example 20]

Ethyl acetate and the polyester A were mixed with each other at 80/20 (ethyl acetate / polyester A ratio by weight). The resultant solvent composition was applied onto the heat-shrinkable polystyrene-based film to give a width of 4 mm and an amount of 400 mg/m$^2$. The resultant was subjected to solvent bonding at a processing speed of 400 m/minute to yield a tubular label roll. By the above-mentioned methods, the label was measured as to whether or not solvent penetration-through was caused, and about the peel strength of the solvent bonded-portion. In Table 8 are shown conditions for the solvent bonding, and the results. The label was a good label about which no solvent penetration-through was caused, and the peel strength of the solvent bonded-portion was large.

[Comparative Example 5]

A tubular label roll was yielded in the same way as in Example 19 except that a bonding solvent made only of ethyl acetate was used. In Table 8 are shown conditions for the solvent bonding, and the results. The label was an unfavorable label having solvent bonded-portion low in peel strength.

[Comparative Example 6]

Only ethyl acetate was applied onto the heat-shrinkable polystyrene-based film to give a width of 4 mm and an amount of 450 mg/m$^2$. The resultant was subjected to solvent bonding at a processing speed of 400 m/minute to yield a tubular label roll. By the above-mentioned methods, the label was measured as to whether or not solvent penetration-through was caused, and about the peel strength of the solvent bonded-portion. In Table 8 are shown conditions for the solvent bonding, and the results. The label was an unfavorable label having solvent bonded-portion large in peel strength but suffering from solvent penetration-through (blocking).

[Comparative Example 7]

THF and the polyester C were mixed with each other at 40/60 (THF / polyester C ratio by weight). An attempt was made for yielding a tubular label roll in the same way as Example 14 except that this solvent composition was used. In Table 8 are shown conditions for the solvent bonding, and the results. The solvent composition was too high in viscosity, so that this solvent composition was unable to be applied onto the film to give a width of 4 mm and an amount of 1 g/m$^2$ or less.

[Table 8]

| | Bonding solvent composition (% by weight) | | | | | | Bonding solvent Composition applied amount (mg/m²) | Solvent bonding processing speed (m/ minute) | Bonding solvent composition viscosity (mPa·s) | Solvent penetration-through (blocking) | Solventbonded portion peel strength (N/ 15mm) |
|---|---|---|---|---|---|---|---|---|---|---|---|
| | THF | MEK | Ethyl acetate | Polyester A | Polyester B | Polyester C | | | | | |
| Example 14 | 90 | - | - | 10 | - | - | 250 | 400 | 8 | ○ | 4.9 |
| Example 15 | - | 90 | - | 10 | - | - | 250 | 400 | 8 | ○ | 4.3 |
| Example 16 | - | - | 90 | 10 | - | - | 250 | 400 | 8 | ○ | 4.3 |
| Example 17 | 80 | - | - | - | 20 | - | 250 | 400 | 9 | ○ | 5.4 |
| Example 18 | 95 | - | - | - | - | 5 | 250 | 400 | 7 | ○ | 4.1 |
| Example 19 | - | - | 60 | 40 | - | - | 100 | 400 | 45 | ○ | 2.9 |
| Example 20 | - | - | 80 | 20 | - | - | 400 | 400 | 11 | ○ | 8.3 |
| Comparative Example 5 | - | - | 100 | - | - | - | 100 | 400 | 6 | ○ | 1.6 |
| Comparative Example 6 | - | - | 100 | - | - | - | 450 | 400 | 6 | × | 8.0 |
| Comparative Example 7 | 40 | - | - | - | - | 60 | | Unable to be applied | 100 or more | | |

EP 3 605 506 B1

[Example 21]

THF and the polypropylene (S-901) were mixed with each other at 90/10 (THF / polypropylene ratio by weight). The resultant solvent composition was applied onto the heat-shrinkable polystyrene-based film to give a width of 4 mm and an amount of 250 mg/m$^2$. The resultant was subjected to solvent bonding at a processing speed of 400 m/minute to yield a tubular label roll. By the above-mentioned methods, the label was measured as to whether or not solvent penetration-through was caused, and about the peel strength of the solvent bonded-portion. In Table 9 are shown conditions for the solvent bonding, and the results. The label was a good label about which no solvent penetration-through was caused, and the peel strength of the solvent bonded-portion was large.

[Example 22]

A tubular label roll was yielded in the same way as in Example 21 except that the solvent/resin-mixed composition was rendered one yielded by mixing MEK and the product S-901 with each other at 90/10 (ratio by weight). In Table 9 are shown conditions for the solvent bonding, and the results. The label was a good label about which no solvent penetration-through was caused, and the peel strength of the solvent bonded-portion was large.

[Example 23]

A tubular label roll was yielded in the same way as in Example 21 except that the solvent/resin-mixed composition was rendered one yielded by mixing ethyl acetate and the product S-901 with each other at 90/10 (ratio by weight). In Table 9 are shown conditions for the solvent bonding, and the results. The label was a good label about which no solvent penetration-through was caused, and the peel strength of the solvent bonded-portion was large.

[Example 24]

Ethyl acetate and the hydrogenated petroleum resin (P-140) were mixed with each other at 95/5 (ethyl acetate / hydrogenated petroleum resin ratio by weight). The resultant solvent composition was applied onto the heat-shrinkable polystyrene-based film to give a width of 4 mm and an amount of 250 mg/m$^2$. The resultant was subjected to solvent bonding at a processing speed of 400 m/minute to yield a tubular label roll. By the above-mentioned methods, the label was measured as to whether or not solvent penetration-through was caused, and about the peel strength of the solvent bonded-portion. In Table 9 are shown conditions for the solvent bonding, and the results. The label was a good label about which no solvent penetration-through was caused, and the peel strength of the solvent bonded-portion was large.

[Example 25]

Ethyl acetate and the product S-901 were mixed with each other at 70/30 (ethyl acetate / product S-901 ratio by weight). The resultant solvent composition was applied onto the heat-shrinkable polystyrene-based film to give a width of 4 mm and an amount of 250 mg/m$^2$. The resultant was subjected to solvent bonding at a processing speed of 400 m/minute to yield a tubular label roll. By the above-mentioned methods, the label was measured as to whether or not solvent penetration-through was caused, and about the peel strength of the solvent bonded-portion. In Table 9 are shown conditions for the solvent bonding, and the results. The label was a good label about which no solvent penetration-through was caused, and the peel strength of the solvent bonded-portion was large.

[Example 26]

Ethyl acetate and the product S-901 were mixed with each other at 70/30 (ethyl acetate / product S-901 ratio by weight). The resultant solvent composition was applied onto the heat-shrinkable polystyrene-based film to give a width of 4 mm and an amount of 100 mg/m$^2$. The resultant was subjected to solvent bonding at a processing speed of 400 m/minute to yield a tubular label roll. By the above-mentioned methods, the label was measured as to whether or not solvent penetration-through was caused, and about the peel strength of the solvent bonded-portion. In Table 9 are shown conditions for the solvent bonding, and the results. The label was a good label about which no solvent penetration-through was caused, and the peel strength of the solvent bonded-portion was large.

[Comparative Example 8]

THF and the product P-140 were mixed with each other at 40/60 (THF / product P-140 ratio by weight). An attempt was made for yielding a tubular label roll in the same way as in Example 1 except that this bonding solvent composition was used. In Table 9 are shown conditions for the solvent bonding, and the results. The solvent composition was too high in viscosity, so that this bonding solvent composition was unable to be applied onto the film to give a width of 4 mm and an amount of 1 g/m$^2$ or less.

[Table 9]

| | Bonding solvent composition (% by weight) | | | | | Bonding solvent composition applied amount (mg/m²) | Solvent bonding processing speed (m/minute) | Bonding solvent composition viscosity (mPa·s) | Solvent penetration-through (blocking) | Solventbonded portion peel strength (N/15mm) |
|---|---|---|---|---|---|---|---|---|---|---|
| | THF | MEK | Ethyl acetate | Polypropylene (S-901) | Hydrogenated petroleum resin (P-140) | | | | | |
| Example 21 | 90 | - | - | 10 | - | 250 | 400 | 12 | ○ | 5.5 |
| Example 22 | - | 90 | - | 10 | - | 250 | 400 | 12 | ○ | 5.0 |
| Example 23 | - | - | 90 | 10 | - | 250 | 400 | 12 | ○ | 5.0 |
| Example 24 | - | - | 95 | - | 5 | 250 | 400 | 10 | ○ | 4.7 |
| Example 25 | - | - | 70 | 30 | - | 250 | 400 | 30 | ○ | 9.0 |
| Example 26 | - | - | 70 | 30 | - | 100 | 400 | 30 | ○ | 3.8 |
| Comparative Example 8 | 40 | - | - | - | 60 | - | Unable to be applied | 100 or more | - | - |

INDUSTRIAL APPLICABILITY

About the heat-shrinkable label of the present invention, its solvent bonded-portion are high in peel strength and the label does not easily suffer from solvent penetration-through (blocking), even when the amount of a solvent is varied in the step of bonding end portions of its heat-shrinkable polyvinyl chloride-based film or heat-shrinkable polystyrene-based film to each other to make the film into a cyclic form. Thus, the label is high in industrially applicable value.

**Claims**

1.   A heat-shrinkable label having a tubular shape, in which both end portions of a heat-shrinkable polyvinyl chloride-based film or a heat-shrinkable polystyrene-based film are bonded to each other with a solvent composition containing at least one organic solvent selected from the group consisting of tetrahydrofuran, methyl ethyl ketone and ethyl acetate,
     wherein the solvent composition further contains at least one resin selected from the group consisting of polyester, polypropylene and hydrogenated petroleum resin, and
     the end portion bonded has a peel strength of 2 N/15mm or more.

2.   The heat-shrinkable label according to claim 1, wherein the resin contained in the solvent composition is the polyester, and a content of the resin in the solvent composition is from 5 to 40% both inclusive by weight.

3.   The heat-shrinkable label according to claim 1, wherein the resin contained in the solvent composition is the polypropylene or the hydrogenated petroleum resin, and a content of the resin in the solvent composition is from 5 to 40% both inclusive by weight.

4.   The heat-shrinkable label according to any one of claims 1 to 3, wherein the heat-shrinkable polyvinyl chloride-based film or the heat-shrinkable polystyrene-based film has a thickness of 5 to 50 um both inclusive.

5.   A package, comprising the heat-shrinkable label recited in any one of claims 1 to 4 on at least a part of an outer circumference of a packaging object.

6.   A manufacturing method for a heat-shrinkable label, the method comprising:
     bonding both end portions of a heat-shrinkable polyvinyl chloride-based film or a heat-shrinkable polystyrene-based film to each other in a manner that the end portions are overlapped with each other through a solvent composition containing at least one organic solvent selected from the group consisting of tetrahydrofuran, methyl ethyl ketone and ethyl acetate,
     wherein the solvent composition further contains at least one resin selected from the group consisting of polyester, polypropylene and hydrogenated petroleum resin.

7.   Use of a solvent composition containing at least one organic solvent selected from the group consisting of tetrahydrofuran, methyl ethyl ketone and ethyl acetate to manufacture a heat-shrinkable label by bonding a heat-shrinkable polyvinyl chloride-based film or a heat-shrinkable polystyrene-based film,
     wherein the solvent composition further contains at least one resin selected from the group consisting of polyester, polypropylene and hydrogenated petroleum resin.

**Patentansprüche**

1.   Ein wärmeschrumpfbares Etikett mit einer schlauchförmigen Form, wobei beide Endabschnitte einer wärmeschrumpfbaren Folie auf Polyvinylchlorid-Basis oder einer wärmeschrumpfbaren Folie auf Polystyrol-Basis mit einer Lösungsmittelzusammensetzung, die mindestens ein organisches Lösungsmittel, ausgewählt aus der Gruppe bestehend aus Tetrahydrofuran, Methylethylketon und Ethylacetat enthält, miteinander verklebt sind,

     wobei die Lösungsmittelzusammensetzung weiter mindestens ein Harz, ausgewählt aus der Gruppe bestehend aus Polyester, Polypropylen und hydriertem Erdölharz, enthält und
     der verklebte Endabschnitt eine Schälfestigkeit von 2 N/15 mm oder mehr aufweist.

2.   Das wärmeschrumpfbare Etikett nach Anspruch 1, wobei das in der Lösungsmittelzusammensetzung enthaltene Harz der Polyester ist und ein Gehalt des Harzes in der Lösungsmittelzusammensetzung 5 bis 40 Gew.-%, jeweils einschließlich, beträgt.

3. Das wärmeschrumpfbare Etikett nach Anspruch 1, wobei das in der Lösungsmittelzusammensetzung enthaltene Harz das Polypropylen oder das hydrierte Erdölharz ist und ein Gehalt des Harzes in der Lösungsmittelzusammensetzung 5 bis 40 Gew.-%, jeweils einschließlich, beträgt.

4. Das wärmeschrumpfbare Etikett nach einem der Ansprüche 1 bis 3, wobei die wärmeschrumpfbare Folie auf Polyvinylchlorid-Basis oder die wärmeschrumpfbare Folie auf Polystyrol-Basis eine Dicke von 5 bis 50 μm, jeweils einschließlich, aufweist.

5. Eine Verpackung, umfassend das wärmeschrumpfbare Etikett nach einem der Ansprüche 1 bis 4 auf zumindest einem Teil eines Außenumfangs eines Verpackungsgegenstandes.

6. Ein Herstellungsverfahren für ein wärmeschrumpfbares Etikett, wobei das Verfahren umfasst:

> Verkleben beider Endabschnitte einer wärmeschrumpfbaren Folie auf Polyvinylchlorid-Basis oder einer wärmeschrumpfbaren Folie auf Polystyrolbasis miteinander derart, dass die Endabschnitte einander überlappen, mit einer Lösungsmittelzusammensetzung, die mindestens ein organisches Lösungsmittel, ausgewählt aus der Gruppe bestehend aus Tetrahydrofuran, Methylethylketon und Ethylacetat, enthält,
> wobei die Lösungsmittelzusammensetzung weiter mindestens ein Harz, ausgewählt aus der Gruppe bestehend aus Polyester, Polypropylen und hydriertem Erdölharz, enthält.

7. Verwendung einer Lösungsmittelzusammensetzung, die mindestens ein organisches Lösungsmittel, ausgewählt aus der Gruppe bestehend aus Tetrahydrofuran, Methylethylketon und Ethylacetat, enthält, zur Herstellung eines wärmeschrumpfbaren Etiketts durch Verkleben einer wärmeschrumpfbaren Folie auf Polyvinylchlorid-Basis oder einer wärmeschrumpfbaren Folie auf Polystyrol-Basis,
wobei die Lösungsmittelzusammensetzung weiter mindestens ein Harz, ausgewählt aus der Gruppe bestehend aus Polyester, Polypropylen und hydriertem Erdölharz, enthält.

**Revendications**

1. Etiquette thermorétractable ayant une forme tubulaire, dans laquelle les deux portions d'extrémité d'un film à base de poly(chlorure de vinyle) thermorétractable ou d'un film à base de polystyrène thermorétractable sont collées l'une à l'autre avec une composition de solvant contenant au moins un solvant organique choisi dans le groupe constitué par le tétrahydrofurane, la méthyléthylcétone et l'acétate d'éthyle, dans laquelle

> la composition de solvant contient en outre au moins une résine choisie dans le groupe constitué par un polyester, un polypropylène et une résine de pétrole hydrogénée, et
> la portion d'extrémité collée a une résistance au pelage de 2 N/15 mm ou plus.

2. Etiquette thermorétractable selon la revendication 1, dans laquelle la résine contenue dans la composition de solvant est un polyester, et la teneur en la résine de la composition de solvant est de 5 à 40 % en poids, bornes comprises.

3. Etiquette thermorétractable selon la revendication 1, dans laquelle la résine contenue dans la composition de solvant est un polypropylène ou une résine de pétrole hydrogénée, et la teneur en la résine de la composition de solvant est de 5 à 40 % en poids, bornes comprises.

4. Etiquette thermorétractable selon l'une quelconque des revendications 1 à 3, dans laquelle le film à base de poly(chlorure de vinyle) thermorétractable ou le film à base de polystyrène thermorétractable a une épaisseur de 5 à 50 μm bornes comprises.

5. Conditionnement comprenant l'étiquette thermorétractable indiquée dans l'une quelconque des revendications 1 à 4 sur au moins une partie d'une circonférence extérieure d'un objet d'emballage.

6. Méthode de fabrication d'une étiquette thermorétractable, la méthode comprenant :

le collage des deux portions d'extrémité d'un film à base de poly(chlorure de vinyle) thermorétractable ou d'un film à base de polystyrène thermorétractable l'une à l'autre de telle manière que les portions d'extrémité se chevauchent l'une l'autre par l'intermédiaire d'une composition de solvant contenant au moins un solvant organique choisi dans le groupe constitué par le tétrahydrofurane, la méthyléthylcétone et l'acétate d'éthyle, dans laquelle la composition de solvant contient en outre au moins une résine choisie dans le groupe constitué par un polyester, un polypropylène et une résine de pétrole hydrogénée.

7. Utilisation d'une composition de solvant contenant au moins un solvant organique choisi dans le groupe constitué par le tétrahydrofurane, la méthyléthylcétone et l'acétate d'éthyle pour la fabrication d'une étiquette thermorétractable par collage d'un film à base de poly(chlorure de vinyle) thermorétractable ou d'un film à base de polystyrène thermorétractable,

dans laquelle la composition de solvant contient en outre au moins une résine choisie dans le groupe constitué par un polyester, un polypropylène et une résine de pétrole hydrogénée.

**EP 3 605 506 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014034881 A
- EP 2892044 A1
- US 20140099462 A1
- JP 3075019 B
- JP 3452021 B
- JP 2014043520 A